Europäisches Patentamt

European Patent Office

Office européen des brevets

(11) Veröffentlichungsnummer: **0 111 045**
**B1**

# (12) EUROPÄISCHE PATENTSCHRIFT

(45) Veröffentlichungstag der Patentschrift:
26.10.88

(21) Anmeldenummer: **83105118.0**

(22) Anmeldetag: **24.05.83**

(51) Int. Cl.⁴: **H 01 S 3/03,** H 01 S 3/045,
H 01 S 3/07

(54) Laseranordnung.

(30) Priorität: **11.12.82 DE 3245959**

(43) Veröffentlichungstag der Anmeldung:
**20.06.84 Patentblatt 84/25**

(45) Bekanntmachung des Hinweises auf die Patenterteilung:
**26.10.88 Patentblatt 88/43**

(84) Benannte Vertragsstaaten:
**AT BE CH DE FR GB IT LI NL SE**

(56) Entgegenhaltungen:
**EP - A - 0 065 761**
**US - A - 4 099 143**

(73) Patentinhaber: **TZN Forschungs- und
Entwicklungszentrum Unterlüss GmbH,
Neuensothrither Strasse 20, 3104 Unterlüss (DE)**

(72) Erfinder: **Gürs, Karl, Prof. Dr., Weissdornweg 23,
D-6236 Eschborn 2 (DE)**

(74) Vertreter: **Podszus, Burghart, Dipl.-Phys., Rheinmetall
GmbH Ulmenstrasse 125 Postfach 6609,
D-4000 Düsseldorf (DE)**

## Beschreibung

Die Erfindung betrifft eine Laseranordnung nach dem Gastransport-Prinzip mit Gasumwälz-, Kühl- und Anregungssystem und schneller longitudinaler Gasströmung.

Leistung, Verstärkung und Wirkungsgrad der Moleküllaser, insbesondere der $CO_2$-Laser, nehmen mit steigender Temperatur im Lasergas ab. Die Abnahme der Leistungsfähigkeit beruht darauf, dass mit zunehmender Temperatur die Linienbreite grösser wird, die Anregungsenergie sich auf eine zunehmende Zahl von Rotationslinien verteilt, die Zahl der desaktivierenden Stösse zunimmt und die Besetzung des Laserendniveaus durch thermische Anregung zunimmt und damit die Inversion abnimmt (K. Gürs, «Laser 75 Opto-Electronics», Conference proceedings, S. 30–37).

Aus diesem Grund wurden bereits Methoden entwickelt, die Wärme mit dem Lasergas dur Umwälzen und Kühlen des Gases abführen. Geeignete Laser bestehen aus einem aktiven Bereich, in dem das Gas angeregt wird, mit angrenzendem oder integriertem optischen Resonator, aus dem Gasführungssystem mit eingebautem Kühler und einer Pumpe. Da grosse Wärmemengen abzuführen sind, müssen grosse Gasmengen umgepumpt werden. Die entsprechenden bekannten Laser sind gross und aufwendig, ihre Einsatzmöglichkeit ist wegen ihrer Unhandlichkeit begrenzt.

Dieser Nachteil tritt bei den longitudinal durchstömten Lasern besonders in Erscheinung, bei denen in den bekannten Anordnungen lange Gasleitungen erforderlich sind. Ausserdem verursachen diese Leitungen einen entsprechend hohen Strömungswiderstand. Dadurch sinkt die Leistungsfähigkeit des Systems, oder man benötigt besonders grosse Pumpen.

Bei den transversal durchströmten Systemen ist der Wechselwirkungsweg der angeregten aktiven Moleküle im Laserresonator relativ klein. Da die Leistungsdichte der Laser nicht weit über der Sättigungsleistung liegt, geht auf diese Weise Anregungsenergie verloren, und die Laser haben einen vergleichsweise kleinen Wirkungsgrad von z.B. weniger als ca. 10%. Ausserdem ist die transversale Anregung relativ inhomogen, wodurch sich ungünstige Strahleigenschaften ergeben.

Die angegebenen Nachteile der bekannten Gastransport- bzw. Konvektionslaser konnten bereits durch eine Anordnung beseitigt werden, bei der die Laserkammer als gekühltes Rohr ausgebildet und konzentrisch innerhalb einer Umwälzturbine angeordnet ist (DE-OS 3 121 372). Dadurch wird in der Tat bereits ein wesentlicher Fortschritt gegenüber herkömmlichen Gastransport-Lasern mit longitudinaler Gasströmung erzielt. Allerdings ist dieser Laser nur mit grossem technischem Aufwand zu realisieren.

Besonders aufwendig und auch in der Serienproduktion teuer sind vier Komponenten und zwar
– die Lager. Wegen des grossen Durchmessers bei Aussenlagerung und der grossen Drehgeschwindigkeit ergibt sich eine sehr grosse Geschwindigkeit der bewegten gegen die stehenden Teile. Das Problem konnte durch Einsatz von Gaslagern gelöst werden.

– der Antrieb. Als schnellaufendes System (400 U/s) mit hohem Innenläufer stellt der Motor eine aufwendige Sonderkonstruktion dar.

– die Beschaufelung. Auch der Umwälzverdichter ist eine Sonderkonstruktion. Besonders ungewöhnlich und schwierig herzustellen ist das System der an einem rotierenden Aussenrohr befestigten Turbinenschaufeln. Auch die Verwendung von Radialverdichtern bringt wegen der damit verbundenen komplizierten Gasführung keine wesentliche Vereinfachung.

– das Kühlsystem. Die kreissymmetrische Bauweise und die Notwendigkeit einer grossen Kühlleistung machen auch diese Komponente zu einer aufwendigen Konstruktion.

Im übrigen werden in den bekannten Gastransportlasern Pumpen und Gebläse der verschiedensten Arten verwendet, z.B. Drehschieberpumpen, Roots-Gebläse (K. Gürs, «Laser 75, Opto-Electronics», Conference Proceedings, S. 30–37 oder H. Herbrich und B. Dellith, DE-OS 2 925 829), Querstromlüfter (J.D. Foster, US-PS 4 099 143) oder Radialgebläse (H.J. Seguin und G. Sedgwick, Appl. Optics 11, 1972, 745–748 oder K. Sasaki u.a., EP-A-0 015 003). In allen Fällen sind die verschiedenen Komponenten jeweils als Teilsysteme mit definierter Funktion getrennt zu identifizieren.

Der vorliegenden Erfindung liegt daher die Aufgabe zugrunde, eine besonders kompakt aufgebaute und leistungsfähige Laseranordnung zu entwickeln, bei der alle Funktionen voll integriert sind, so dass in Kombination mit einer neuen Gasführung ohne Zwischenrohrleitungen sehr kurze Wege realisiert werden können.

Diese Aufgabe ist erfindungsgemäss dadurch gelöst, dass zur Gasumwälzung mindestens ein Radialverdichter mit Diffusor und Gasumlenkelemente oder -blechen vorgesehen ist und mindestens zwei Längsrohre, die zusammen den Laserresonator bilden, einerseits direkt in den Einlauf des Radialverdichters münden oder vom Diffusor wegführen und dass die Längsrohre andererseits mit mindestens einem, direkt vom Diffusor wegführenden oder in den Einlauf des Radialverdichters mündenden und als Kühlstrecke ausgebildeten Strömungskanal über Gasumlenkformteile verbunden sind, so dass mindestens eine integrierte Kreislaufstrecke für das Lasergas entsteht. Vorteilhafte Ausführungsformen der erfindungsgemässen Anordnung werden in den Unteransprüchen 2 bis 11 beschrieben.

Die Erfindung beseitigt nicht nur die bereits genannten Nachteile der bekannten Gastransportlaser. Es wird darüberhinaus ein Gastransportlaser als besonders kompaktes und leistungsfähiges System mit technisch einfachen Mitteln bereitgestellt. Der Laser ist klein, hat eine grosse Ausgangsleistung, einen hohen Wirkungsgrad und ist preiswert herzustellen.

Bei der erfindungsgemässen Anordnung sind die verschiedenen Funktionen völlig integriert. Im übrigen lässt sich die Anordnung auf zwei verschiedene Arten ausführen, je nachdem ob der Kühler auf der Druckseite und die Laserrohre auf der Saugseite des Radialverdichters untergebracht sind oder umgekehrt.

Die Erfindung wird anhand beiliegender Zeichnung näher beschrieben. Es zeigt in schematischer Vereinfachung

Fig. 1 im Vertikalschnitt eine Ausführungsform der erfindungsgemässen Anordnung;

Fig. 2 die in Fig. 1 dargestellte Anordnung im Horizontalschnitt;

Fig. 3 und 4 schematisch eine Kombination mehrerer Anordnungen nach Fig. 1 und 2 in paralleler und gekreuzter Anordnung der Längs- bzw. Laserrohre;

Fig. 5 eine weitere Ausführungsform, bei der mehrere Anordnungen gemäss Fig. 1 und 2 hintereinandergeschaltet sind und

Fig. 6 ein weiteres Ausführungsbeispiel mit zwei, an der Seite der Gasumlenkformteile zusammengefügten Anordnungen.

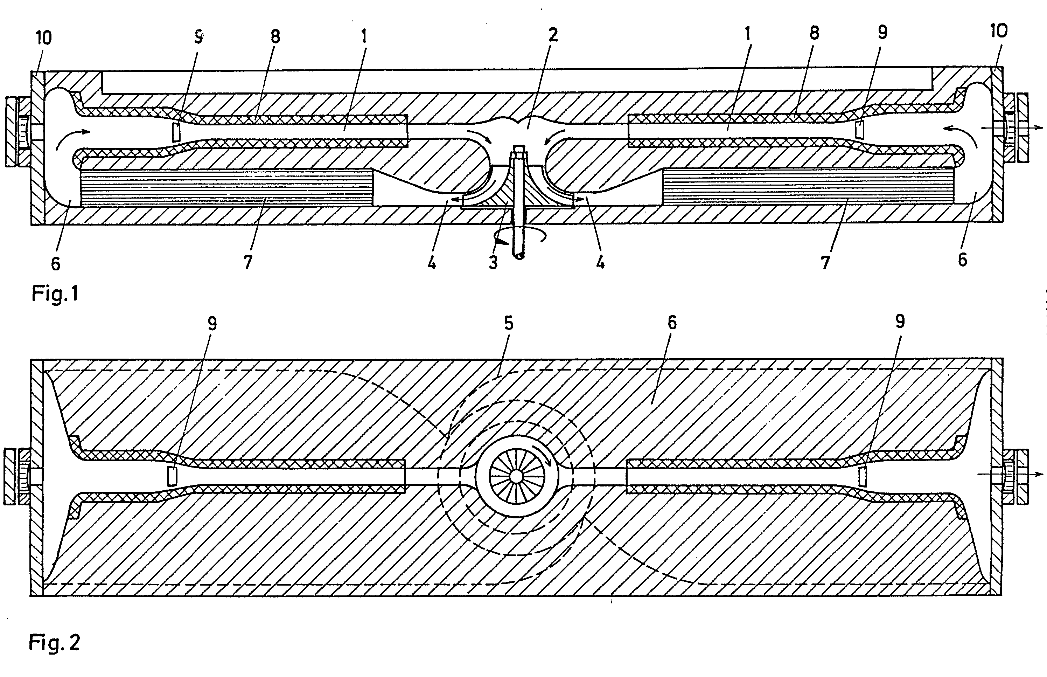

In der in Fig. 1 und 2 gezeigten Anordnung wird das Lasergas in der Mitte des Längsrohres 1 mit grosser Geschwindigkeit abgezogen und strömt dabei ohne Zwischenrohrleitung direkt in den aerodynamisch günstig geformten Einlauf 2 eines Radialverdichters 3. Die Achse des Radialverdichters 3 wird senkrecht zur Achse des aus den beiden Längsrohren 1 gebildeten Laserresonators angeordnet.

Das Gas kommt nach Autritt aus dem Verdichter 3 durch den Diffusor 4 und die beiden spiralförmigen Gasumlenkelementen 5 ohne Rohrleitung direkt in den breiten Strömungskanal 6, der vorzugsweise den Wärmeaustauscher 7 einschliesst und wird beiderseits wieder in das Laserrohr 1 umgelenkt bzw. zurückgeführt.

Das eigentliche Laserrohr ist dabei in bekannter Weise aus einem isolierenden Material 8 wie Glas, Keramik oder Kunststoff hergestellt und in das Längsrohr 1 eingelassen. In einer bevorzugten Ausführungsform verbreitert sich das Laserrohr an der Stelle der ringförmigen Elektrode 9. Die Ringelektrode 9 liegt vorzugsweise nicht an der Wandung an, sondern ein Teil des Lasergases kann aussen am Ring vorbei in den übrigen Abschnitt des Laserrohres 1 einströmen. Durch entsprechenden Abstand der Elektroden 9 von der Endplatte 10 des Lasers wird sichergestellt, dass die Gasentladung nicht gegen die Strömungsrichtung zu den Stirnplatten 10 des Lasersystems hin durchschlägt.

In einer zweiten Version sind die beiden Endteile des gesamten Lasersystems zwischen einer Ebene, die etwa senkrecht durch die Elektroden 9 geht, und den Stirnplatten 10 aus isolierendem Material hergestellt. Die Stirnplatten sind isoliert, und es kann sich keine Gasentladung zwischen den Elektroden 9 und den Stirnplatten 10 ausbilden. Wenn man den Kühler 7 entsprechend verkürzt, kann man in diesem Fall den Abstand der Elektrode 9 zu den Stirnplatten 10 kleiner machen und das Laserrohr 1 noch besser ausnutzen. Selbstverständlich ist nicht nur der Kühler 7 von Wasser durchflossen, sondern auch die übrigen, von dem Lasergas erwärmten Teile werden mit Wasser oder einem anderen Kühlmittel gekühlt.

Mit einem Verdichter von ca. 20 cm Laufraddurchmesser ergeben sich im Laserrohr bei 4,5 cm Rohrdurchmesser und 1,50 m Länge Strömungsgeschwindigkeiten von über 240 m/s; die Ausgangsleistung liegt bei annähernd 1 kW.

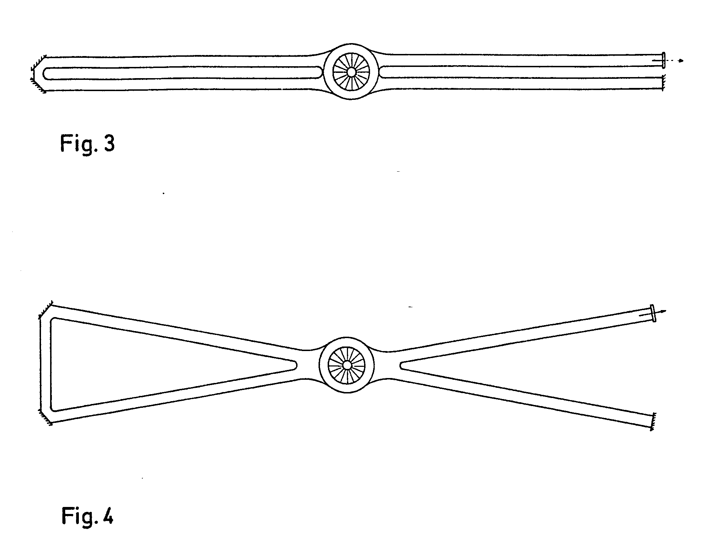

Das System lässt sich jedoch leicht zu noch wesentlich höheren Leistungen bringen. Mit einem grösseren Verdichter und grösserem Rohrdurchmesser können Leistungen von über 3 kW erzielt werden. In Hinsicht auf gute Strahlqualität günstiger ist allerdings die Verwendung von zwei dünneren Laserrohren in paralleler oder gekreuzter Anordnung, wie in Fig. 3 und 4 dargestellt, anstelle eines Rohres mit entsprechend grösserem Durchmesser. In beiden Fällen werden die beiden Rohre durch zwei (nicht eingezeichnete) Umlenkspiegel optisch verbunden.

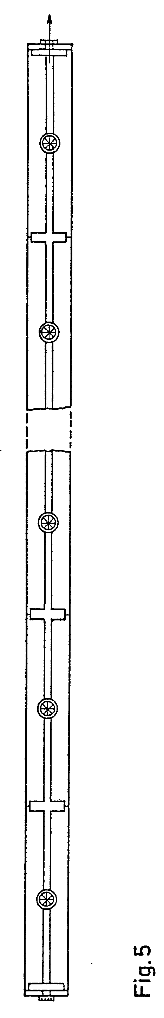

Selbstverständlich können auch mehrere Systeme der erfindungsgemässen Art miteinander gekoppelt werden, und zwar parallel nebeneinander, übereinander oder hintereinander. Im Fall der Hintereinanderschaltung, wie es in Fig. 5 gezeigt ist, entfallen die Zwischenspiegel zur Kopplung der Systeme.

Bei Verwendung doppelflutiger Turbinen kann man auch zwei Systeme in spiegelbildlicher Anordnung ohne Trennwand an der Unterseite der Kühler 7 zusammenfügen.

Die Erfindung lässt sich auch in der Weise realisieren, dass der Kühler auf der Saugseite und die Laserrohre auf der Druckseite angeordnet sind. In diesem Fall strömt das Lasergas nach Durchlaufen des Kühlers ohne Zwischenrohrleitung direkt in den aerodynamisch günstig geformten Einlauf des Radialverdichters, gelangt nach Austritt aus dem Verdichter und Durchströmen der Spirale (Leitbleche) direkt in einen als Laserrohr oder parallele Anordnung von Laserrohren ausgebildeten Strömungskanal, wird an den Enden dieses Strömungskanals umgelenkt und fliesst wieder in den Kühler zurück.

Besonders günstig und zur Erzeugung hoher Laserleistungen geeignet ist eine rotationssymmetrische Anordnung, bei der die Drehachse des Gebläserades und die Achsen der Laserrohre parallel zueinander verlaufen.

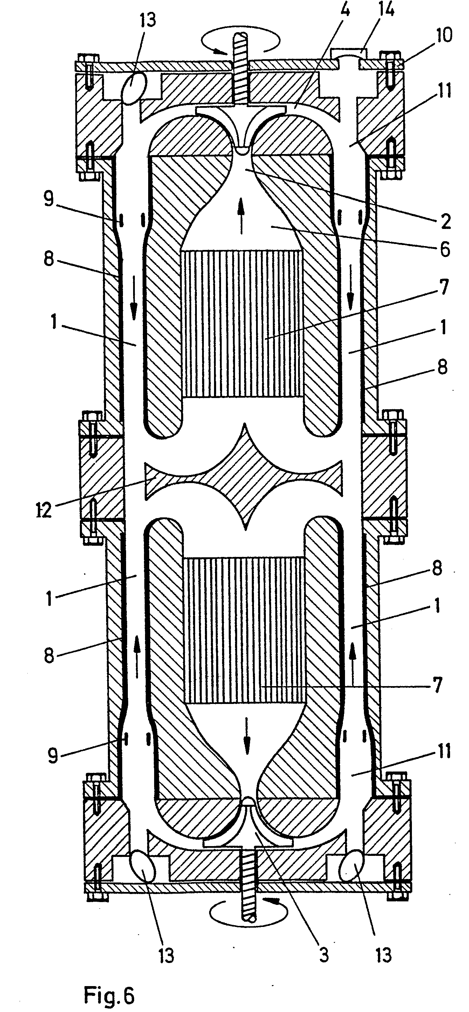

Auch in dieser Anordnung, wie in Fig. 6 dargestellt, wird das Lasergas durch den entlang der Achse des Systems angeordneten Kühler 7 hindurch abgezogen, tritt durch einen Diffusor 4 und eine Spirale in Form von Gasleitblechen in einen ringförmigen Kanal 11, der in Laserrohre 1 unterteilt ist. Die Laserrohre 1 müssen dabei selbstverständlich nicht den ganzen Querschnitt des ringförmigen Bereichs ausfüllen. Vielmehr kann das Gas durch eine begrenzte Anzahl von z.B. sechs symmetrisch angeordneten Laserrohren 1 hindurchgeleitet werden. Nach Durchlaufen der Laserrohre 1 wird das Gas in einem Formteil 12 wieder in den Kühler 7 zurückgeführt. Die Laserleistung wird durch geeignete geneigte Spiegel 13 von einem Rohr jeweils in das nächste umgelenkt, so dass sich auf diese Weise zwischen den Endspiegeln 14 eine Laserschwingung aufbauen kann. Ein Endspiegel ist in bekannter Weise als teildurchlässiger Spiegel ausgeführt; durch ihn kann die Laseremission austreten.

Eine weitere Verdoppelung der Leistung erreicht man, wenn man zwei derartige Systeme mit gleicher Achse jedoch in spiegelbildlicher Anordnung auf der Seite des Umlenkformteils oder der Seite des Gebläserades zusammenfügt. Eine Verschmutzung der Spiegel wird vermieden, wenn man die Strömungsrichtung so wählt, dass die Gasbewegung, wie in Fig. 6 eingezeichnet, beiderseits von den Spiegeln wegführt.

Selbstverständlich kann auch in diesem Fall das Gesamtsystem in Modulbauweise ausgeführt sein. Durch Bau des Zwischenteils aus isolierendem Material, teilweiser Isolierung des Umlenkteils und zusätzlicher Verwendung von je einer Hochspannungselektrode in der Mitte des Systems ist es ausserdem möglich, die Elektroden 9 auf Erdpotential zu legen und am Anfang der Laserrohre anzuordnen, so dass die Laserrohre in ganzer Länge als aktive Bereiche genutzt werden können. Zur Verbesserung der Gasentladung (Zündung und Homogenität) können ausserdem Zwischenelektroden vorgesehen werden.

**Patentansprüche**

1. Laseranordnung nach dem Gastransport-Prinzip mit Gasumwälz-, Kühl- und Anregungssystem und schneller longitudinaler Gasströmung, dadurch gekennzeichnet, dass zur Gasumwälzung mindestens ein Radialverdichter (3) mit Diffusor (4) und Gasumlenkelementen oder -blechen (5) vorgesehen ist, dass mindestens zwei Längsrohre (1, 11), die zusammen den Laserresonator bilden, einerseits direkt in den Einlauf (2) des Radialverdichters münden oder vom Diffusor (4) wegführen und dass die Längsrohre (1, 11) andererseits mit mindestens einem, direkt vom Diffusor (4) wegführenden bzw. in den Einlauf (2) des Radialverdichters mündenden und als Kühlstrecke (7) ausgebildeten Strömungskanal (6) über Gasumlenkformteile (12) verbunden sind, so dass mindestens eine integrierte Kreislaufstrecke für das Lasergas entsteht.

2. Laseranordnung nach Anspruch 1, dadurch gekennzeichnet, dass die Achse des Radialverdichters (3) senkrecht zu den Achsen zweier Längsrohre (1) angeordnet ist, welche zusammen ein gerade verlaufendes Laserrohr bilden, und dass der Diffusor (4) auf beiden Seiten direkt in zwei breite, zu den Längsrohren parallel verlaufende Strömungskanäle (6) übergeht.

3. Laseranordnung nach Anspruch 2, dadurch gekennzeichnet, dass mindestens vier Längsrohre zwei parallele Laserrohre bilden, deren Strahlungsgänge mittels Umlenkspiegel miteinander gekoppelt sind.

4. Laseranordnung nach Anspruch 2, dadurch gekennzeichnet, dass mindestens vier Längsrohre zwei Laserrohre bilden, welche gekreuzt zueinander verlaufen und deren Strahlungsgänge mittels Umlenkspiegel miteinander gekoppelt sind.

5. Laseranordnung nach Anspruch 2, dadurch gekennzeichnet, dass mehrere Anordnungen mit gemeinsamer Achse hintereinander geschaltet sind.

6. Laseranordnung nach Anspruch 1, dadurch gekennzeichnet, dass sie rotationssymmetrisch ausgeführt ist, dass der Einlauf (2) mindestens eines Radialverdichters (3) in einen zentral verlaufenden Strömungskanal (6) übergeht und dass der Diffusor (4) nach aussen in einen zylindrischen Kanal (11) übergeht, der in mehrere Laserrohre (1) unterteilt ist und dass der Strahlengang der Laserrohre (1) mittels Umlenkspiegel (13) miteinander gekoppelt ist.

7. Laseranordnung nach Anspruch 6, dadurch gekennzeichnet, dass zwei Anordnungen mit gleicher Achse spiegelbildlich auf der Seite der Gasumlenkformteile (12) oder auf der Seite der Radialverdichter (3) zusammengefügt sind, wobei die Strömungsrichtung des Lasergases auf beiden Seiten von den Laserspiegeln (14) wegführt.

8. Laseranordnung nach einem der Ansprüche 1 bis 7, dadurch gekennzeichnet, dass sie modulweise aus mehreren getrennten Einheiten vakuumdicht zusammengesetzt ist.

9. Laseranordnung nach Anspruch 8, dadurch gekennzeichnet, dass die innere Einheit aus mindestens zwei Längsrohrstücken, dem Einlauf (2) des Radialverdichters, dem Diffusor (4) mit dem Radialverdichter (3) und den Umlenkelementen (5) besteht, an die sich auf beiden Seiten je eine Einheit mit Längsrohrstücken und Strömungskanälen und je eine weitere Einheit mit Gasumlenkformteil und Endplatte (10) mit Laserspiegel anschliesst.

10. Laseranordnung nach Anspruch 8, dadurch gekennzeichnet, dass die innere Einheit aus Gasumlenkformteilen (12) besteht, an die sich auf beiden Seiten je eine Einheit mit konzentrisch angeordnetem zylindrischen, in Laserrohre (1) unterteilten Kanal (11) und zentralem Strömungskanal (7) und eine weitere Einheit aus dem Einlauf (2) des Radialverdichters dem Diffusor (4) mit dem Radialverdichter (3), Gasumlenkelementen (5) und der Endplatte (10) mit dem Laserspiegel (3) anschliesst.

11. Laseranordnung nach einem der Ansprüche 8 bis 10, dadurch gekennzeichnet, dass isolierte Laserrohre (8) in die Längsrohre (1) eingeschoben sind und sich auf beiden Seiten über alle Moduln erstrecken.

**Claims**

1. Laser device operating on a gas transport principle using gas circulation, cooling and excitation system and rapid longitudinal gas flow, characterised by the fact.that for the gas circulation at least one radial compressor (3) with diffuser (4) and gas deflecting elements or plates (5) is provided and that at least two longitudinal tubes (1, 11) which together form the laser resonator, lead, on one hand, directly into the inlet (2) of the radial compressor or away from the diffuser (4) and that the longitudinal tubes (1, 11) are, on the other hand, connected via gas deflecting formed parts (12) with at least one flow channel (6) leading directly from the diffuser (4) and into the inlet (2) of the radial compressor and constructed as a cooling section (7), so that at least one integrated circuit section is created for the laser gas.

2. Laser device in accordance with Claim 1, characterised by the fact that the axis of the radial compressor (3) is positioned perpendicularly to the axes of two longitudinal tubes (1) which together form a linear laser tube, both sides of the diffuser (4) continuing directly in the form of two wide flow channels (6) extending parallel to the longitudinal tubes.

3. Laser device in accordance with Claim 2, characterised by the fact that at least four longitudinal tubes form two parallel laser tubes of which the beam path is coupled by means of deflecting mirrors.

4. Laser device in accordance with Claim 2, characterised by the fact that at least four longitudinal tubes form two laser tubes which cross over in relation to each other and of which the beam paths are coupled together by means of deflecting mirrors.

5. Laser device in accordance with Claim 2, characterised by the fact that a number of devices with a common axis are connected to one another in succession.

6. Laser device in accordance with Claim 1, characterised by the fact that it is constructed so as to be rotationally symmetrical, the inlet (2) of at least one radial compressor (3) continuing in the form of a flow channel (6) taking a central course, the diffuser (4) continuing in the outward direction in the form of a cylindrical channel (11) subdivided into a number of laser tubes (1), the paths of the beams of the laser tubes (1) being coupled together by means of deflecting mirrors (13).

7. Laser device in accordance with Claim 6, characterised by the fact that two concentric systems are combined in a specularly symmetrical manner on the side of the radial compressor (3) the direction of flow of the laser gas on both sides moving away from the laser mirrors (14).

8. Laser device in accordance with one of Claims 1 to 7, characterised by the fact that it is constructed on the modular principle from a number of separate units in a vacuum-tight manner.

9. Laser device in accordance with Claim 8, characterised by the fact that the inner unit comprises at least two longitudinal tube pieces, the inlet (2) of the radial compressor, the diffuser (4) with the radial compressor (3) and the deflecting elements (5) which are each followed, on both sides, by a unit with longitudinal tube pieces and flow channels and by a further unit with a formed gas deflecting part and an end plate (10) with a laser mirror.

10. Laser device in accordance with Claim 8, characterised by the fact that the inner unit comprises formed gas deflecting parts (12) which are each followed, on both sides, by a unit with concentrically positioned cylindrical channel (11) subdivided into laser tubes (1) and a central flow channel (7) and a further unit consisting of the inlet (2) of the radial compressor, the diffuser (4) with the radial compressor (3), gas deflecting elements (5) and the end plate (10) with the laser mirror (3).

11. Laser device in accordance with one of Claims 8 to 10, characterised by the fact that insulated laser tubes (8) are inserted into the longitudinal tubes (1) and extend on both sides over all the modules.

**Revendications**

1. Système à laser selon le principe à circulation de gaz, comprenant un système de mise en circulation, de refroidissement et d'excitation du gaz et écoulement longitudinal et rapide du gaz, caractérisé en ce qu'il est prévu pour mettre le gaz en circulation au moins un compresseur radial (3) avec un diffuseur (4) et des éléments ou des tôles de renvoi de gaz (5), en ce qu'au moins deux tubes longitudinaux (1, 11) qui forment ensemble le résonateur du laser, débouchent d'une part directement dans l'entrée (2) du compresseur radial ou partent du diffuseur (4) et en ce que les tubes longitudinaux (1, 11) sont par ailleurs reliés par l'intermédiaire d'éléments façonnés de renvoi de gaz (12) à au moins un canal d'écoulement (6) partant directement du diffuseur (4) ou débouchant dans l'entrée (2) du compresseur radial et constitué sous forme d'un parcours de refroidissement (7), de manière que soit formé au moins un parcours à circuit circulaire intégré pour le gaz du laser.

2. Système à laser selon la revendication 1, caractérisé en ce que l'axe du compresseur radial (3) est monté perpendiculairement aux axes de deux tubes longitudinaux (1), qui forment ensemble un tube à laser rectiligne, et en ce que le diffuseur (4) se prolonge sur les deux côtés directement en deux larges canalisations d'écoulement (6) qui sont parallèles aux tubes longitudinaux.

3. Système à laser selon la revendication 2, caractérisé en ce qu'au moins quatre tubes longitudinaux forment deux tubes à laser parallèles, dont les parcours de rayonnement sont couplés l'un à l'autre par des miroirs de renvoi.

4. Système à laser selon la revendication 2, caractérisé en ce que au moins quatre tubes longitudinaux forment deux tubes à laser, qui sont montés en croix l'un par rapport à l'autre et dont les parcours de rayonnement sont couplés l'un à l'autre par des miroirs de renvoi.

5. Système à laser selon la revendication 2, caractérisé en ce que plusieurs systèmes à axe commun sont montés à la suite les uns des autres.

6. Système à laser selon la revendication 1, caractérisé en ce qu'il est réalisé à symétrie de révolution, en ce que l'entrée (2) d'au moins un compresseur radial (3) se prolonge en un canal d'écoulement central (6) et en ce que le diffuseur (4) se prolonge vers l'extérieur par un canal cylindrique (11) qui est subdivisé en plusieurs tubes à laser (1) et en ce que les parcours de rayonnement des tubes à laser (1) sont couplés les uns aux autres par des miroirs de renvoi (13).

7. Système à laser selon la revendication 6, caractérisé en ce que deux systèmes à axe commun sont rassemblés de façon symétrique sur le côté des éléments façonnés de renvoi de gaz (12) ou sur le côté des compresseurs radiaux (3), la direction de l'écoulement du gaz du laser étant écartée sur les deux côtés des miroirs à laser (14).

8. Système à laser selon l'une quelconque des revendications 1 à 7, caractérisé en ce qu'il est formé par le rassemblement de façon étanche au vide et modulaire de plusieurs unités séparées.

9. Système à laser selon la revendication 8, caractérisé en ce que l'unité interne est constituée par au moins deux sections de tubes longitudinales, par l'entrée (2) du compresseur radial, par le diffuseur (4) comprenant le compresseur radial (3) et par les éléments de renvoi (5), à laquelle se raccordent de chaque côté une unité respective à sections de tubes longitudinales et à canalisations d'écoulement et une autre unité respective à élément façonné de renvoi de gaz et à plaque d'extrémité (10) comprenant un miroir à laser.

10. Système à laser selon la revendication 8, caractérisé en ce que l'unité interne est constituée par des éléments façonnés de renvoi de gaz (12), à laquelle se raccordent de chaque côté une unité respective à canal (11) cylindrique, placé concentriquement et subdivisé en tubes à laser (1), et à canal d'écoulement central, et une autre unité constituée par l'entrée (2) du compresseur radial, par le diffuseur (4) avec le compresseur radial (3), par les éléments de renvoi de gaz (5) et par la plaque d'extrémité (10) avec le miroir à laser (3).

11. Système à laser selon l'une quelconque des revendications 8 à 10, caractérisé en ce que des tubes à laser isolés (8) sont enfoncés dans les tubes longitudinaux (11) et s'étendent des deux côtés sur tous les modules.

Fig. 1

Fig. 2

0 111 045

Fig. 3

Fig. 4

Fig.5

Fig. 6